# EUROPÄISCHE PATENTSCHRIFT

(11) **EP 0 532 789 B1**
(45) Veröffentlichungstag und Bekanntmachung des Hinweises auf die Patenterteilung: **10.07.1996**
(21) Anmeldenummer: 91115993.7
(22) Anmeldetag: 20.09.1991
(51) Int. Cl.: B23K 7/10, G05D 16/20

(54) **Brennschneidmaschine mit einfacher und vielseitiger Massenstromsteuerung**
Flame cutting machine with a multi-use and simple mass stream control
Machine de découpage du chalumeau comprenant une commande d'écoulement massique simple et variée

(43) Veröffentlichungstag der Anmeldung: 24.03.1993
(73) Patentinhaber: HORST K. LOTZ Feuerschutzbaustoffe, D-65719 Hofheim (DE)
(72) Erfinder: Lotz, Horst K., W-6238 Hofheim Wallau (DE); Lotz, Mattias, W-6200 Wiesbaden-Delkenheim (DE); Manning, Glyndwr, "Furlongs", Burton-on-Trent, Staffordshire (GB)

(56) Entgegenhaltungen:
- EP-A- 0 039 000
- EP-A- 0 385 286
- DE-U- 9 006 365
- US-A- 4 863 142

## Beschreibung

Zum Zerteilen von Werkstücken aus Stahl wird neben anderen Verfahren zunehmend das autogene Brennschneiden eingesetzt, ein thermo-chemisches Verfahren, bei dem auf Zündtemperatur erhitztes Eisen bzw. Stahl durch einen Strahl reinen Sauerstoffes verbrennt. Zu der beim Verbrennen des Werkstoffes am Sauerstoffstrahl entstehenden und das Verfahren unterstützenden Wärme wird noch zusätzlich von außen zugeführte Wärme benötigt. Das gilt auch bei schon aufgrund des Material-Herstellungs- und Bearbeitungsverfahrens vorhandener Eigenwärme. Dazu dient eine dem Schneidstrahl aus Sauerstoff zugeordnete Heizflamme, die beim Verfahrensbeginn auch das Anwärmen auf Zündtemperatur besorgt.

Diese Heizflamme brennt am Ausgang der Schneiddüse aus vielen kleinen Heizbohrungen, die den mittig angeordneten Schneidsauerstoffkanal zentrisch umgeben und wird aus jeder Heizbohrung mit einem Gemisch aus Heizgas (Erdgas, Propan, Koksgas, Acetylen usw.) und Sauerstoff d.h. einem sogenannten Heizsauerstoff versorgt.

Das Heizgas/Heizsauerstoff-Gemisch wird mittels injektorartig angeordneter Dosierbohrungen in der Düse vor den Heizbohrungen erzeugt, die aus dem Brenner mit vorgeschalteten Schläuchen, Rohren, Gassteuereinrichtungen und Druckreglern mit den eingestellten Drücken und Mengen ankommen.

Zum optimalen Einstellen dieser Drücke und Mengen dient die Gassteuereinrichtung, die üblicherweise aus Hand-Absperrventil, Filter, Druckregler mit Manometern für Vor- und Nachdruck sowie Magnetventil zum Abschalten besteht. Oft wird noch über eine Umgehungsleitung vor dem Abschaltmagnetventil eine kleine Gasmenge mit Einstellventil und vielleicht einem NOT-AUS-Magnetventil für eine immer brennende Zündflamme entnommen (siehe EP-B-280 692).

Früher waren alle vorgenannten Elemente über Rohrleitungen mit aufgeschraubten bzw. aufgelöteten Verbindungs- bzw. Verschraubungsteilen verbunden, aus Platz-, Wartungs- und Wirtschaftlichkeitsgründen wurden sie als Abschluß einer Neuentwicklung in eine Gassteuereinheit im und am Gehäuse des Druckreglers vereint. Mit dessen Hilfe war es möglich, die jeweils anströmende Menge mit Netzdruck auf einen niedrigeren Druck einzustellen, der dem Betriebsdruck am Brenner/Düse bei zugehöriger Menge zuzüglich der Druckverluste bis zum Brenner entsprach.

Da bei einer Verengung der Heizflammenbohrungen durch Schlackespritzer oder der oft vorgeschalteten Rückbrennsicherung durch Schmutz im Gas oder Sauerstoff die Flammenleistung sinkt bzw. bei einer Erweiterung der Heizflammenbohrungen durch Verschleiß die Flammenleistung unerwünscht steigt, wurde umständlich und teuer der jeweilige Gasstrom mit elektrisch wirkenden Durchflußmessungen festgestellt und die ermittelten Werte zum Verstellen des Nachdruckes mittels eines Motorantriebes am Druckregler verwendet. Auch wurden eigenständige und zusätzlich den Durchfluß messende und auch den Nachdruck automatisch beeinflussende Geräte nachgeschaltet.

Ein neu entwickelter Massenstromhahn (siehe EP-A-494 330, Stand der Technik gemäß Art. 54(3) EPÜ) zum Einbau in bzw. zum Anbau an das Gehäuse der Gassteuereinheit war dann eine preiswertere und einfachere Lösung der Aufgabe, die verbrennbare Masse des jeweiligen Gases definiert aus Druck und Menge an der Düse trotz vorbeschriebener, äußerer Einflüsse in Grenzen von ±10% gleichzuhalten. Dies geschieht, indem der Nachdruck hinter dem Massenstromhahn sich umgekehrt wie der Widerstand zum und am Düsenausgang verhält und nur immer die gleiche Masse entweder mit höherem oder niedrigerem Druck und niedrigerem oder höherem Abfluß zur Düse freigibt.

Die vorliegende Erfindung gemäß den Ansprüchen 1 und 2 beansprucht eine weniger aufwendige, platzsparende und noch direkter wirkende Massensteuerung bzw. -regelung eines Gases am Druckregler bzw. in einer Gasssteuereinheit zu bewirken und erlaubt auch bei einem geeignet gewählten Nachdruck des Druckreglers mehrere gleiche oder unterschiedliche Massenströme gleichzeitig und beliebig zu- und abgeschaltet verfügbar zu machen, die, einmal eingestellt, sich jeweils in einem Bereich von ±15%, ja bis ±20% gegenüber einer Abflußveränderung selbsttätig gleich halten.

Zum besseren Verständnis wird die beanspruchte Erfindung nachfolgend im Umweg über die o.a. Gassteuereinheit beschrieben.

Es zeigen:
- Fig. 1: eine bekannte Gassteuereinheit,
- Fig. 2: einen bekannten Massenstromhahn,
- Fig. 3: einen Schnitt durch eine Gassteuereinheit gemäß der Erfindung
- Fig. 4: einen Schnitt durch eine Gassteuereinheit gemäß der Erfindung
- Fig. 5: eine Aufsicht auf einen Verteiler.

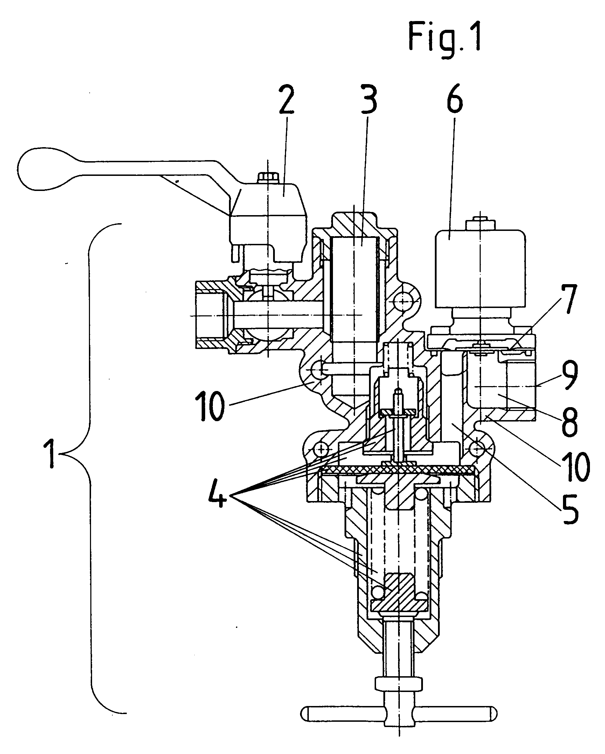

In Figur 1 ist eine vorbekannte Gassteuereinheit (1) der erstgenannten Art gemäß EP 0 280 692 B1 nur erläuternd dargestellt, mit einem Absperrhahn (2), vor einem Filter (3), einem Druckregler (4), einem Abfluß (5) zum Magnetventil (6) auf einer Magnetventil-Aufsatzfläche (7) über einer Ausgangsbohrung (8) vor einer Austrittsbohrung (9) aus dem Gehäuse (10) der Gassteuereinheit (1). Manometer sind vereinfachend nicht dargestellt.

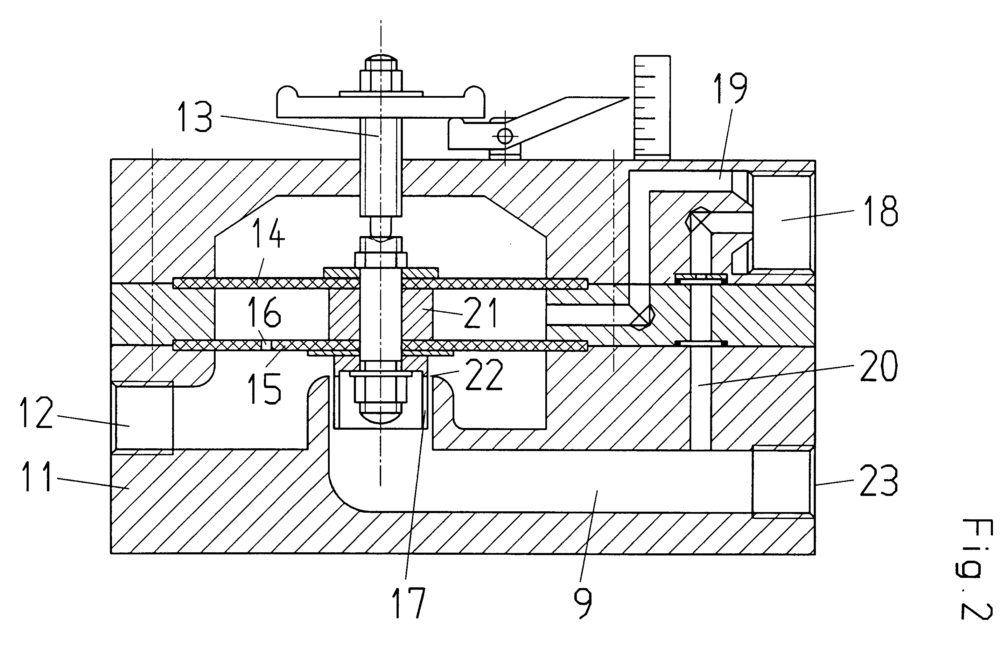

Die Figur 2, in der EP 0 494 330 Figur 1, zeigt einen somit vorbekannten Massenstromhahn (11) der aus verschiedenen Teilen bestehend mit seinem Eingang (12) mit der Austrittsbohrung (9) der Gassteuereinheit (1) in Fig. 1 verbunden ist. Die Magnetventilaufsatzfläche in Fig. 1 wäre dann beispielsweise mit einem Blindflansch verschlossen. Über eine Einstellspindel (13) wird der Hub einer Arbeitsmembran (14) begrenzt, während die Hahnmembran (15) mit einer Ausgleichsöffnung (16) ein Hahnstück (17) trägt und dieses beim Abfluß des Mediums bei offenem Magnetventil im Magnetventilsitz (18) durch den Ventilkanal (19) und den Entspannungskanal (20) angehoben wird. Die Form und Art des Hahnstückes (17) erlaubt einen Abfluß einer bestimmten nur schwer veränderlichen Masse Gases, die durch das Abströmen des Steueranteils des Mediums durch den Entspannungskanal (20) kaum beeinflußt wird. Schließt das vorgesteuert arbeitende Magnetventil im Magnetventilsitz (18), dann baut sich im Raum zwischen den Membranen (14 und 15) der Nachdruck des Druckreglers (4) in Fig. 1 auf und aufgrund der Feder 21 zwischen den Membranen schließt sich der Massenstromhahn (11) an seinem Hahnspalt (22) gegenüber seinem Austritt (23).

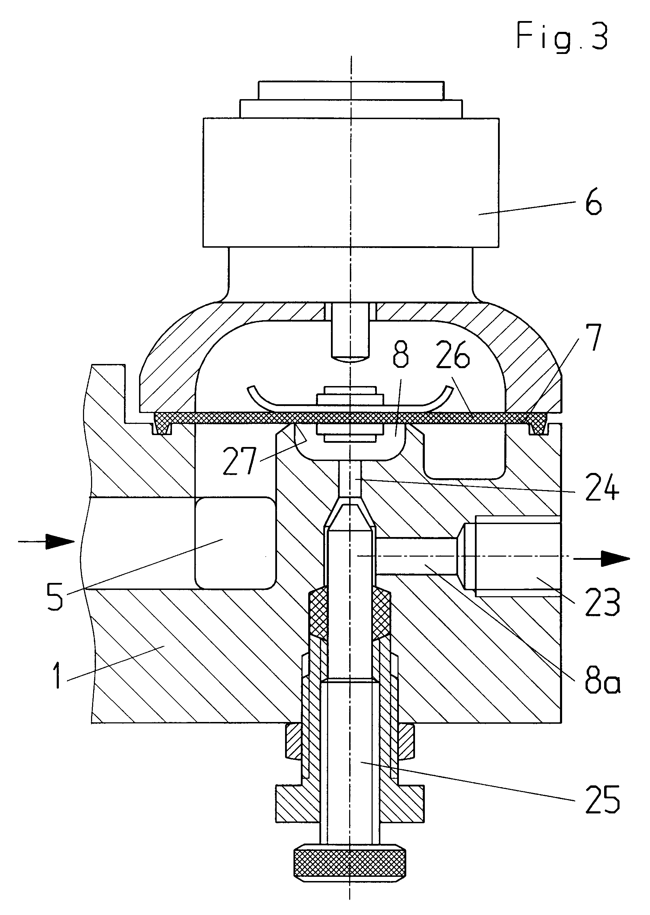

In Figur 3 nun ist eine Gassteuereinheit gemäß der Erfindung dargestellt.

Auf der Aufsatzfläche (7) für das bisherige Magnetventil (6) der Gassteuereinheit (1), sitzt jetzt, wie in Fig. 3 gezeigt, wieder ein vorgesteuertes Magnetventil (6). Der diesem gegenüber angeordnete Abfluß (5) vom Regler zum Magnetventil (6), Ausgangsbohrung (8) bis zur Austrittsbohrung (9) aus Fig. 1 ist jedoch in Fig. 3 neu gestaltet. Aus der Ausgangsbohrung (8) entsteht eine kleinere, sich konisch auf der Abströmseite öffnende Hahnbohrung (24) in die ein mit kegeligem Kopf und Stopfbuchse versehenes und mittels Gewinde verstellbares Hahnstück (25) eingesetzt ist. Hinter der kegeligen Aufweitung der Hahnbohrung (24) zweigt dann eine Massenausgangsbohrung (8a) zu einem Austritt (23) hin ab. Mittels entsprechender Stellung des Hahnstückes (25) mit einem ringförmigen Auslaß aus der Hahnbohrung (24) über das Hahnstück (25) hin zur Massenausgangsbohrung (8a) ergeben sich mit Beeinflussung der Membrane (26) des Magnetventils (6) und ihrer Lage über dem Dichtrand (27) der Ausgangsbohrung (8) Druck- und Strömungsverhältnisse, die bei gegebenem Arbeitsdruck nach dem Regler (4) in Fig. 1 und eingestelltem Durchflußquerschnitt am Hahnstück (25) in Fig. 3 Querschnittsänderungen von ±20% am Düsenauslaß etwa gleichen Massenstrom des Mediums zur Gleichhaltung der Flammenleistung der Heizflamme ergeben. Aufgrund entsprechender Versuche ist damit der Aufwand für Nachstellung des Heizgas- oder Heizsauerstoffdruckes innerhalb der normalen Lebensdauer einer Schneiddüse zwischen Reinigungsmaßnahmen oder Düsenaustausch auf ein absolutes Mindestmaß verringert, das ist besonders wichtig bei Schwerzugänglichkeiten und ununterbrochen notwendigem Einsatz über Tage oder Wochen. Auch die Lebensdauer der Schneiddüse durch entstehende Überheizung wegen Bohrungsverschleiß bei ansonst sauberem Betrieb steigt um wesentliches, Einflüsse auf das Werkstück z. B. angerundete Schneidkante bleiben vermieden oder unwesentlich.

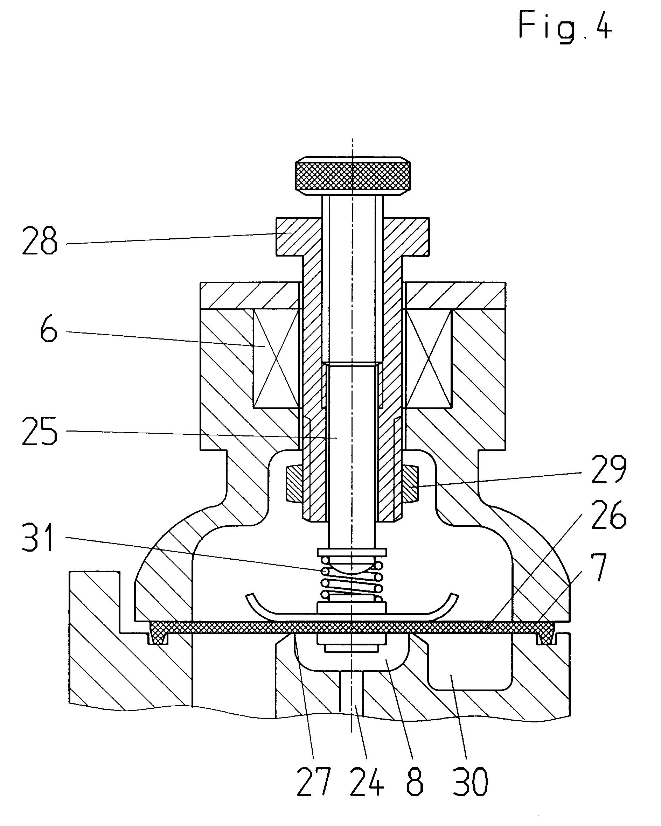

In Fig. 4 wird ein Magnetventil (6) gezeigt, das auf der Magnetventilaufsatzfläche (7) nach Fig. 1 sitzt und bei dem unterhalb der Membran (26) nur eine Ausgangsbohrung (8) mit vielleicht verringerter aber sonst einfacher Hahnbohrung (24) ohne weitere Elemente und direktem Weiterfluß zum Schneidbrenner angeordnet ist.

Über der Membran (26) befindet sich der Anker (28) mit Gegenmutter (29), durch den ein Hahnstück (25) durch Schrauben verstellt und ein Hub entsprechend dem gewünschten Massenstrom zwischen Membran (26) und Dichtrand (27) eingestellt werden kann. Wenn sich der Anker (28) zum Öffnen des Durchganges angeschaltet hebt, kann der Druck des Mediums im Ringraum (30) die Membran (26) nur bis zum Hahnstück heben, was den max. Durchfluß begrenzt. Sollte jedoch durch Querschnittsvergrößerung (Verschleiß an der Düse) die Strömungsgeschwindigkeit zwischen Dichtrand (27) und dem Abfluß (5) bzw. einer Hahnbohrung (24) ansteigen, so steigt der Sog unterhalb der Membran und verringert durch Ansaugen derselben den Durchfluß entsprechend.

Ist zwischen dem Hahnstück (25) und der Membran (26) eine entsprechend dimensionierte Druckfeder (31) angeordnet, so kann zwischen derselben und einem vorhandenen Druck im zufließenden Medium ein Gleichgewicht eingestellt werden, das bei stärkerem oder schwächerem Abfluß d.h. Abfall bzw. Anstieg des Druckes unter der Membran (26) sofort durch Abfall oder Anstieg der Federkraft zur entgegenwirkenden Bewegung der Membran und zur Verringerung der Erhöhung des Durchflußwiderstandes und damit zur Wiedergewinnung des Gleichgewichtes, d.h. zu gleichem Massedurchgang führt.

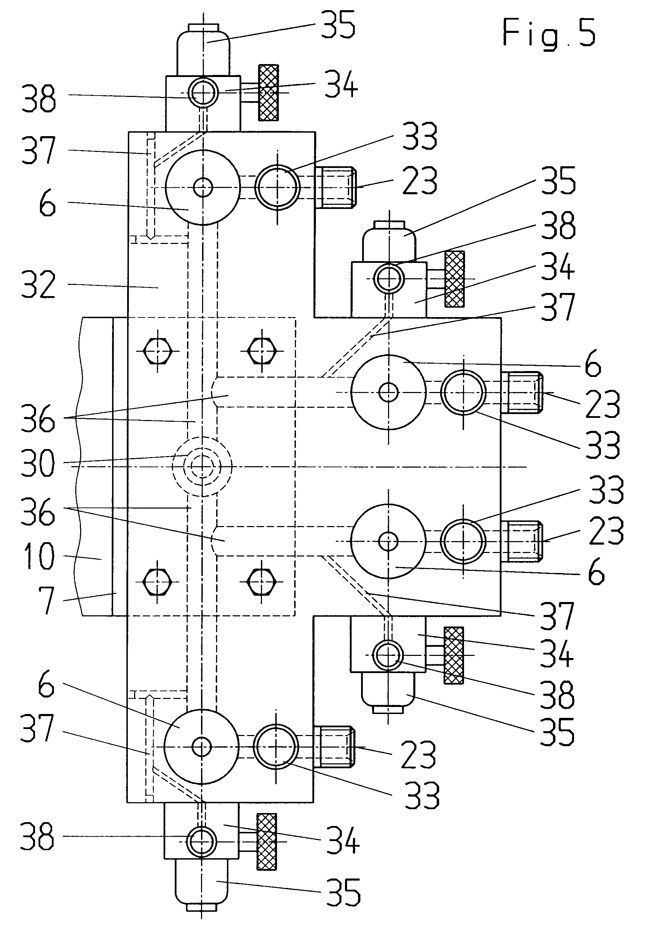

Der Aufsatz eines Magnetventils (6) auf das Gehäuse (10) der Gassteuereinheit (1) in Fig. 1 kann erfindungsgemäß auch durch den Aufsatz eines plattenförmigen Verteilers (32) in Figur 5 als Draufsicht dargestellt, ersetzt werden, der 2, 3 oder 4 evtl. auch mehr als Gewindestutzen dargestellte Austritte (23) hat. Dieser Verteiler (32) ist so gestaltet, daß die Bauteile Magnetventile (6) mit integrierten Hahnstücken (25) in Fig. 4 oder gegenüberliegenden Hahnstücken (25) in Fig. 3, nachgeschalteten, nicht näher beschriebenen Durchflußanzeigen (33), die Aufsatzfläche (7) des Gehäuses (10) mehreckig abgestuft oder abgeschrägt seitlich und in Durchflußrichtung soweit überragend, so daß Ober- und Unterflächen für Magnetventil (6), Durchflußanzeigen (33) und den Einbau der Hahnstücke (25) verfügbar sind, mindestens 2 Seiten- bzw. Endflächen für die Anordnung von Austritten (23) bzw. von Zündflammen-Einstellventilen (34) mit oder ohne Zündflammen-Magnetventilen (35). Alle Elemente sind durch Verteilerbohrungen (36) bzw. durch Umgehungsbohrungen (37) mit dem gasführenden Ringraum (30) des Gehäuses (10) der Gassteuereinheit (1) verbunden. Die vor dem Massenstromhahn (11) bzw. vor dem Magnetventil (6) entnommenen Teilmengen werden nach Einstellung durch das Zündflammen-Einstellventil (34) über die Zündflammenaustritte (38) einem Zündbrenner bzw. dem Schneidbrenner selbst zum schwachen Weiterbrennen in Betriebspausen zugeführt. Diese Zündflammen-Einstellventile (34) und Zündflammenaustritte (38) können bei entsprechender Kanalführung natürlich auch auf oder unter der Verteilerplatte angeordnet sein.

Durch den erfindungsgemäßen, direkten Aufsatz eines Magnetventils (6) ohne Massensteuerungselemente auf die Verteilerplatte (32) kann dieses nur als Absperrventil dienen. Damit kommt nur der im Druckregler (4) in Figur 1 erzeugte Nachdruck zur Geltung. Dieses ist zum Beispiel für die Steuerung des Betriebsmittels Schneidsauerstoff ausreichend. So kann bei geeigneter Dimensionierung eine Gassteuereinheit (1) in Fig. 1 gleichzeitig sowohl zur Versorgung bzw. Steuerung bei Schneidsauerstoff als auch durch Passieren des Massenstromhahnes gebildet aus Handstück (17) mit zugehörigen Bauteilen und Ausführungen zusammen mit der Membrane (26) bei Heizsauerstoff eingesetzt werden. Das gilt bei entsprechend kleinen Querschnitten für sonst übliche Nachdruckunterschiede von 5 bis 15 bar = 500 - 1500 KPA zwischen Heiz- und Schneidsauerstoff.

Für einen automatisch kontrollierten bzw. ferngesteuerten Betrieb können die Durchflußanzeigen (33) als elektrische Meßwertgeber ausgeführt und die Hahnstücke (25) mit Steuermotoren ausgerüstet sein.

### Legende

- 1: Gassteuereinheit
- 2: Absperrhahn
- 3: Filter
- 4: Druckregler
- 5: Abfluß
- 6: Magnetventil
- 7: Aufsatzfläche
- 8: Ausgangsbohrung
- 8a: Massenausgangsbohrung
- 9: Austrittsbohrung
- 10: Gehäuse
- 11: Massenstromhahn
- 12: Eingang
- 13: Einstellspindel
- 14: Arbeitsmembran
- 15: Hahnmembran
- 16: Ausgleichsöffnung
- 17: Hahnstück
- 18: Magnetventilsitz
- 19: Ventilkanal
- 20: Entspannungskanal
- 21: Feder
- 22: Hahnspalt
- 23: Austritt
- 24: Hahnbohrung
- 25: Hahnstück
- 26: Membrane
- 27: Dichtrand
- 28: Anker
- 29: Gegenmutter
- 30: Ringraum
- 31: Feder
- 32: Verteilerplatte
- 33: Durchflußanzeige
- 34: Zündflammeneinstellventil
- 35: Zündflammenmagnetventil
- 36: Verteilerbohrung
- 37: Umgehungesbohrung
- 38: Zündflammenaustritt

## Patentansprüche

1. Brennschneidmaschine mit einfachen und vielseitigen Massenstromsteuerungen zur Versorgung von Schneidbrennern mit Gas und Sauerstoff, die Gassteuereinrichtungen aufweist, wobei jede Gassteuereinrichtung Absperrventil, Filter, einstellbaren Druckregler, Meß- und Anzeigegeräte zum Anzeigen der Drücke und Ströme in einer Einheit zusammenfaßt,
wobei am Ausgang der Gassteuereinrichtung eine Absperrmembrane (26) und ein Magnetventil (6) vorgesehen sind, welches mit der Absperrmembrane (26) zusammenwirkt, so daß die Membrane eine Ausgangsbohrung (8) öffnet bzw. schließt,
wobei aus der Ausgangsbohrung eine sich auf der Abströmseite öffnende Hahnbohrung (24) entsteht, in der ein verstellbares Hahnstück als Massenstromhahn angeordnet ist,
wobei zu den Meß- und Anzeigegeräten für die Drücke am Druckregelteil der Gassteuereinrichtung auch noch Meß- und Strömungsanzeigen an den Ausgängen hinter den Massenstromhähnen angeordnet sind,
wobei die Verstellspindeln für Druckregelung und Massenstromsteuerung mit elektrischen, hydraulischen oder pneumatischen Antrieben zur Verstellung und die Meß- und Anzeigegeräte für Druck und Strömung mit Sensoren für Fernsteuerung und Fernanzeige ausgerüstet sind.

2. Brennschneidmaschine mit einfachen und vielseitigen Massenstromsteuerungen zur Versorgung von Schneidbrennern mit Gas und Sauerstoff, die Gassteuereinrichtungen aufweist, wobei jede Gassteuereinrichtung Absperrventil, Filter, einstellbaren Druckregler, Meß- und Anzeigegeräte zum Anzeigen der Drücke und Ströme in einer Einheit zusammenfaßt,
wobei am Ausgang der Gassteuereinrichtung eine Absperrmembrane (26) und ein Magnetventil (6) vorgesehen sind, welches mit der Absperrmembrane (26) zusammenwirkt, so daß die Membrane eine Ausgangsbohrung (8) öffnet bzw. schließt,
wobei in dem Anker (28) des Magnetventils eine Spindel verstellbar angeordnet ist, so daß ein Hub der Membrane entsprechend dem gewünschten Massenstrom eingestellt werden kann und die Spindel mit der Membrane zusammen selbst als Massenstromhahn wirkt,
wobei zu den Meß- und Anzeigegeräten für die Drücke am Druckregelteil der Gassteuereinrichtung auch noch Meß- und Strömungsanzeigen an den Ausgängen hinter den Massenstromhähnen angeordnet sind,
wobei die Verstellspindeln für Druckregelung und Massenstromsteuerung mit elektrischen, hydraulischen oder pneumatischen Antrieben zur Verstellung und die Meß- und Anzeigegeräte für Druck und Strömung mit Sensoren für Fernsteuerung und Fernanzeige ausgerüstet sind.

3. Brennschneidmaschine nach einem der Ansprüche 1 und 2, wobei die Gassteuereinrichtung zur gleichzeitigen Versorgung von mehreren Schneidbrennern mehrere Ausgänge aufweist, die durch Zweifach-, Dreifach-, Vierfach- oder allgemein Mehrfach-Verteiler gebildet werden.

4. Brennschneidmaschine nach einem der Ansprüche 1 bis 3, wobei im Ausgangsbereich der Gassteuereinrichtung oder im Verteilerkörper eine Membrane eingesetzt ist, die auf der Ringkante der erst als Ringraum ausgebildeten Ausgangsbohrung aufliegt und von Gasdruck geöffnet bzw. vom Magnetanker des gegenüberliegenden Magnetventils geschlossen wird.

5. Brennschneidmaschine nach einem der Ansprüche 1 bis 4, wobei im Magnetanker eines vorgesteuerten Magnetventils ein starres oder federnd wirkendes, aber immer einstellbares Hahnstück angeordnet ist und dieses auf die Membran wirkt.

6. Brennschneidmaschine nach einem der Ansprüche 3 bis 5, wobei der Verteiler für zwei und mehr Ausgänge mit seinem Eingang auf dem Ausgang des Gehäuses der Gassteuereinheit sitzt und dieses seitlich oder nach vorn soweit überragt, daß von unten zu jedem Ausgang ein Magnetventil und von oben ein Massenstromhahn mit einer benachbarten Druck- oder Durchflußanzeige aufgesetzt sind. An den benachbarten Seitenflächen sind Magnetventile und Einstell- bzw. Absperrhähne für Umgehungsleitungen für eine Zündflammenversorgung angebracht.

## Claims

1. Flame cutting machine with a multi-use and simple mass stream control for supply of oxygen cutting burners with gas and oxygen defined by that it is provided with gas control equipments, whereat each gas control equipment unites shut-off valve, filter, adjustable pressure regulator, measuring devices and displays for indication of pressures and flows,
whereat a shut-off diaphragm (26) and a solenoid valve (6) are provided at the exit of the gas control equipment, the solenoid valve (6) working together with the shut-off diaphragm (26), so that the diaphragm opens respectively shuts an outlet bore (8),
whereat arises a valve bore (24), which gets wider on the downstream side, out of the outlet bore, an adjustable valve piece being arranged in that valve bore (24) serving as mass stream valve,
whereat measuring devices and flow indicators are arranged at the exits behind the mass stream valves in addition to the measuring devices and displays for the pressures at the pressure regulator of the gas control equipment,
whereat the adjusting spindles for pressure regulation and mass stream control are equiped with electric, hydraulic or pneumatic drives for adjustment and the measuring devices and displays for pressure and flow with sensors for remote control and remote indication.

2. Flame cutting machine with a multi-use and simple mass stream control for supply of oxygen cutting burners with gas and oxygen defined by that it is provided with gas control equipments, whereat each gas control equipment unites shut-off valve, filter, adjustable pressure regulator, measuring devices and displays for indication of pressures and flows,
whereat a shut-off diaphragm (26) and a solenoid valve (6) are provided at the exit of the gas control equipment, the solenoid valve (6) working together with the shut-off diaphragm (26), so that the diaphragm opens respectively shuts an outlet bore (8),
whereat a spindle is arranged adjustably in the armature (28) of the solenoid valve, in order to be able to adjust a lift of the diaphragm corresponding to the desired mass stream and so that the spindle itself, together with the diaphragm, works as mass stream valve,
whereat measuring devices and flow indicators are arranged at the exits behind the mass stream valves in addition to the measuring devices and displays for the pressures at the pressure regulator of the gas control equipment,
whereat the adjusting spindles for pressure regulation and mass stream control are equiped with electric, hydraulic or pneumatic drives for adjustment and the measuring devices and displays for pressure and flow with sensors for remote control and remote indication.

3. Flame cutting machine according to one of the claims 1 and 2 defined by that the gas control equipment is equiped with several exits for simultaneous supply of several cutting burners, the exits being double-, triple-, quadruple-, or generally said multiple-distributors.

4. Flame cutting machine according to one of the claims 1 to 3 defined by that a diaphragm is installed in the outlet area of the gas control equipment or in the hydraulic head. This diaphragm leans on the ring-chaped edge of the outlet bore, which was firstly formed as torus, and is opened by gas pressure respectively shut by the armature of the opposing solenoid valve.

5. Flame cutting machine according to one of the claims 1 to 4 defined by that a rigid or spring-mounted but always adjustable valve piece is arranged in the armature of an anticipatorily controlled solenoid valve and has an effect on the diaphragm.

6. Flame cutting machine according to one of the claims 3 to 5 defined by that the distributor for two or more exits is situated with its inlet on the exit of the housing of the gas control equipment. Laterally or forward this housing is surpassed as much by the distributor that a solenoid valve is put on each exit from the bottom and from above a mass stream valve with an adjacent pressure- or flow display. On the adjacent lateral surfaces are installed solenoid valves and adjusting- respectively shut-off valves for by-passes for ignition-flame supply.

## Revendications

1. Machine d'oxycoupage avec régulation simple et efficace du débit massique pour l'alimentation du chalumeau d'oxycoupage en gaz et oxygène, qui présente des dispositifs de régulation compacts regroupant en une unité vanne d'arrêt, filtre, détendeur ajustable, instruments de mesure et d'affichage pour l'affichage des pressions et débits,
caractérisée en ce que, à la sortie de l'élément de détente sont prévues une membrane d'arrêt (26) ainsi qu'une électrovanne (6) qui agit avec la membrane (26) de telle façon que cette dernière ouvre, respectivement ferme un alésage de sortie (8),
caractérisée en ce que, de cet alésage de sortie résulte l'alésage d'une vanne (24) ouvrant sur le côté aval, où vient se loger une vaine de débit massique,
caractérisée en ce que, en plus des instruments de mesure et d'affichage de la pression rapportés à l'élément de détente du dispositif de régulation sont aussi disposés des instruments de mesure et d'affichage du débit à la sortie, derrière les vannes de débit massique,
caractérisée en ce que la tige d'ajustage de pression et de débit est équipée d'un entraînement électrique, hydraulique ou pneumatique pour le réglage et que les instruments de mesure et d'affichage de la pression et du débit sont pourvus de capteurs pour la commande et l'affichage à distance.

2. Machine d'oxycoupage avec régulation simple et efficace du débit massique pour l'alimentation du chalumeau d'oxycoupage en gaz et oxygène, qui présente des dispositifs de régulation compacts regroupant en une unité vanne d'arrêt, filtre, détendeur ajustable, instruments de mesure et d'affichage pour l'affichage des pressions et débits,
caractérisée en ce que, à la sortie de l'élément de détente sont prévues une membrane d'arrêt (26) ainsi qu'une électrovanne (6) qui agit avec la membrane (26) de telle façon que cette dernière ouvre, respectivement ferme un alésage de sortie (8),
caractérisée en ce qu'une tige ajustable est disposée dans l'ancrage (28), de telle façon que la course de la membrane puisse être réglée en correspondance avec le débit massique désiré et que la tige elle-même agisse avec la membrane en tant que vanne de débit massique,
caractérisée en ce que, en plus des instruments de mesure et d'affichage de la pression rapportés à l'élément de détente du dispositif de régulation sont aussi disposés des instruments de mesure et d'affichage du débit à la sortie, derrière les vannes de débit massique,
caractérisée en ce que la tige d'ajustage de pression et de débit est équipée d'un entraînement électrique, hydraulique ou pneumatique pour le réglage et que les instruments de mesure et d'affichage de la pression et du débit sont pourvus de capteurs pour la commande et l'affichage à distance.

3. Machine d'oxycoupage selon l'une des revendications 1 et 2 caractérisée en ce que le dispositif de régulation alimentant simultanément plusieurs chalumeaux d'oxycoupage présente autant de sorties, lesquelles sont regroupées dans un distributeur double, triple, quadruple ou plus généralement multiple.

4. Machine d'oxycoupage selon l'une des revendications 1 à 3 caractérisée en ce qu'une membrane est disposée au niveau de la sortie du dispositif de régulation ou dans le corps de distributeur et repose sur l'arête circulaire de l'alésage de sortie formé principalement d'une chambre en couronne, cette membrane est ouverte sous l'action de la pression du gaz et fermée par l'ancrage magnétique de l'électrovanne située en regard.

5. Machine d'oxycoupage selon l'une des revendications 1 à 4 caractérisée en ce qu'une vanne fixe ou agissant en ressort, mais nécessairement ajustable est disposée dans l'ancrage magnétique d'une électrovanne précommandée et agit sur la membrane.

6. Machine d'oxycoupage selon l'une des revendications 3 à 5 caractérisée en ce que l'entrée du distributeur double ou multiple repose sur la sortie du bâti du dispositif de régulation et dépasse celui-ci d'autant sur le côté ou sur l'avant qu'une électrovanne peut venir se loger en dessous de chaque sortie ainsi que sur le dessus une vanne de débit massique avec affichage de la pression et du débit. Sur les faces lattérales voisines sont rapportées des électrovannes et des vannes de réglage respectivement d'arrêt pour les dérivations d'une alimentation de flamme de veilleuse.
